# EUROPÄISCHE PATENTANMELDUNG

(11) **EP 1 274 061 A2**
(43) Veröffentlichungstag der Anmeldung: **08.01.2003**
(21) Anmeldenummer: 02015092.6
(22) Anmeldetag: 05.07.2002
(51) Int. Cl.: G09F 3/02

(54) **Kennzeichnungssystem**

(30) Priorität: 06.07.2001 DE 10132848
(71) Anmelder: Sulo Umwelttechnik GmbH & Co. KG, 32051 Herford (DE)
(72) Erfinder: Eikelmann, Michael, 33813 Oerlinghausen (DE)
(74) Vertreter: Alber, Norbert, Dipl.-Ing.

(57) **Zusammenfassung**

Entwertbares Kennzeichensystem, insbesondere ein Pfand-System, wie es insbesondere für Getränkeverpackungen, also Dosen und Flaschen, verwendet wird, mit dessen Hilfe sichergestellt ist, daß für ein Objekt das vom Kunden zunächst entrichtete Pfand nur einmal und nicht mehrfach zurückerstattet wird, wobei das Pfand-Merkmal auf dem Objekt detektiert und anschließend irreversibel deaktiviert sowie die Gegenleistung für das Pfandmerkmal erbracht wird.

## Beschreibung

### I. Anwendungsgebiet

Die Erfindung betrifft ein entwertbares Kennzeichensystem, insbesondere ein Pfand-System, wie es insbesondere für Getränkeverpackungen, also Dosen und Flaschen, verwendet wird.

### II. Technischer Hintergrund

Bei derartigen Kennzeichnungssystemen wird im Gegenzug für die Entwertung des Pfandmerkmals irgendeine Gegenleistung erbracht:

Beispielsweise berechtigt das Pfandmerkmal für eine bestimmte Anzahl von Fahrten oder für eine bestimmte Zeitdauer zur Benutzung eines Schiliftes, und nach Deaktivierung ist die Benutzung des Schiliftes nicht mehr möglich, oder das auf einer Eintrittskarte angebrachte Pfandmerkmal berechtigt zum Eintritt in einen Veranstaltungsort. In beiden Fällen kann der Zutritt dadurch automatisiert werden, und zusätzlich beim Eintreten bzw. Benutzen das Pfandmerkmal nach der Detektierung entwertet werden.

Die an das Pfandmerkmal geknüpfte Gegenleistung muß also nicht monetärer Natur sein, sondern kann auch in irgendeiner Handlung, also einem Tun oder auch einem Unterlassen, bestehen, z. B. einer Informationsweitergabe oder Ähnlichem.

Im folgenden wird von dem Kennzeichnungssystem als dem Pfandsystem gesprochen, ohne die Erfindung durch die Wortwahl hierauf zu beschränken.

Bei Pfandsystemen wird beim Kauf des Objektes, beispielsweise einer gefüllten Getränkeflasche, vom Kunden ein Pfand mit entrichtet, welches er bei Rückgabe des - dann meist leeren - Pfandobjektes, insbesondere der Flasche, wieder zurück erhält.

Pfandsysteme wurden in der Vergangenheit hauptsächlich bei mehrfach wiederverwendeten Getränkeverpackungen eingesetzt. Ein vom Kunden zurückgegebenes Objekt wurde daher vom Hersteller sorgfältig weiter gehandhabt, insbesondere zwischengelagert und abtransportiert, da diese Verpackungen erneut gefüllt und zu diesem Zweck weder beschädigt noch von Dritten entwendet werden durften.

Bei einer Ausdehnung des Pfandsystems auch auf Einweg-Verpackungen, bei der zwar die Verpackung einer Wiederverwertung zugeführt, jedoch nicht direkt wieder befüllt, sondern zunächst zerstört und dann zunächst als Rohmaterial wiederverwendet werden, ist diese sorgfältige Behandlung des Objektes nach Auszahlung des Pfandes an den Kunden nicht unbedingt gewährleistet. Zusätzlich ist das Pfandvolumen durch eine Ausdehnung auf Einweg-Verpackungen wesentlich höher geworden.

Daher muß sichergestellt werden, daß für ein und dieselbe leere Verpackung nicht ein zweites Mal Pfand an den Kunden ausgezahlt wird.

Weiterhin ist es aus der DE-A 199 06 255 bekannt, ein Pfandetikett bei der Rückgabe des Pfandwertes zu zerstören, allerdings erst nach deren Einlesen, so dass hier unklar ist, ob dies vor oder nach dem Auszahlen des Pfandgegenwertes erfolgt.

Ferner ist es aus der DE-A 39 06 413 bekannt, als Pfandmerkmal ein separat auf dem Pfandgegenstand aufzuklebendes, nicht vollständig ablösbares Etikett zu verwenden.

### III. Darstellung der Erfindung

### a) Technische Aufgabe

Es ist daher die Aufgabe gemäß der vorliegenden Erfindung, ein Verfahren sowie eine Vorrichtung zu schaffen, mit deren Hilfe sichergestellt ist, daß für ein Objekt das vom Kunden zunächst entrichtete Pfand nur einmal und nicht mehrfach zurückerstattet wird.

### b) Lösung der Aufgabe

Diese Aufgabe wird durch die Merkmale der Ansprüche 1 und 18 gelöst. Vorteilhafte Ausführungsformen ergeben sich aus den Unteransprüchen.

Durch die Verwendung eines deaktivierbaren Pfand-Merkmales ist es möglich, das Pfandmerkmal nach Erkennung, also bei der ersten Auszahlung des Pfandes an den Kunden, zu deaktivieren, wobei diese Deaktivierung nicht umkehrbar sein darf. Grundsätzlich kann die Deaktivierung durch jedes chemische und/oder physikalische Verfahren erfolgen, insbesondere solche Verfahren, welchem das Objekt, auf welchem das Pfandmerkmal angeordnet ist, in seinem natürlichen Lebenszyklus nicht ausgesetzt ist. Insbesondere kann es sich um physikalische Parameter wie eine bestimmte Temperatur/Zeitdauer handeln, wobei rückstandslose Methoden, beispielsweise mittels elektromagnetischer Bestrahlung, zu bevorzugen sind.

Beispielsweise wäre es akzeptabel, wenn eine Getränkedose ein Pfandmerkmal tragen würde, welches allein durch Alterung und ohne gezieltes Deaktivieren von selbst nach ca. 1 oder 2 Jahren sich deaktivieren würde. Da Getränkedosen in der Regel wesentlich kürzere Zeit im gefüllten Zustand und bis zur Rückgabe der leeren Dose überdauern, würde dies einer gezielt bei der Rückgabe durchgeführten Deaktivierung nicht störend entgegenstehen.

Die Deaktivierung kann in jeder detektierbaren Veränderung des Pfandmerkmales bestehen, sei es einer physikalischen, insbesondere sichtbaren, oder einer chemischen Veränderung. Eine sichtbare Veränderung wäre beispielsweise eine Änderung zwischen transparent und nicht transparent oder ein Farbumschlag.

Die Auszahlung an den Kunden kann zwar auch in Bargeld oder als Bon, der beispielsweise aus Papier bestehen kann, und an einer Kasse gegen z. B. Bargeld eingelöst werden kann, erfolgen, wird jedoch in der Regel als Gutschrift auf einem Speichermedium wie etwa einer Wertkarte erfolgen, um das Aufstellen bargeldloser Rücknahme-Automaten, also auch außerhalb von Supermärkten und Getränkemärkten, zu ermöglichen. Die Art der Rückerstattung kann also je nach Anwendungsfall modulartig an dem entsprechenden Annahme-Automaten ergänzt werden.

Zusätzlich wird die Deaktivierung des Pfandmerkmales auch anschließend daraufhin überprüft, ob sie erfolgreich war, insbesondere dadurch, daß erneut versucht wird, daß Pfand-Merkmal zu detektieren, was bei diesem zweiten Versuch nicht mehr erfolgreich sein sollte.

Dabei besteht ein Problem darin, daß die unterschiedlichsten Arten von Objekten, beispielsweise allein bei Verpackungen und Dosen, diese wiederum in unterschiedlichen Größen und Formen sowie Flaschen, auch hier wiederum in unterschiedlichen Größen und Formen, mit einem solchen, prinzipiell jeweils gleichen, Pfandmerkmal ausgestattet werden sollen, und darüber hinaus die unterschiedlichen Objekte auch wiederum mit unterschiedlich gestalteten Aufmachungen, also Etiketten oder Bedruckungen, ausgestattet sind, deren Design durch das Pfandmerkmal nicht beeinflußt werden darf.

Erfindungsgemäß wird daher das Pfandmerkmal im Bereich des Barcodes heraufgebracht bzw. angebracht, und insbesondere der Barcode selbst als Pfandmerkmal verwendet.

Beispielsweise kann die vollständige Lesbarkeit des Barcodes insbesondere der im Barcode enthaltenen Pfandinformationen, z. B. hinsichtlich Höhe des Pfandwertes, Art des Pfand-Gegenstandes etc., als aktives Pfandmerkmal verwendet werden, während ein nicht vollständig oder überhaupt nicht lesbarer Barcode als deaktiviertes Pfandmerkmal, also Pfandmerkmal, auf welches ein Pfand bereits an den Kunden zurückgezahlt wurde, gewertet wird.

Zur Überprüfung, ob aufgrund des Pfandmerkmales ein Pfand an den Kunden ausgezahlt werden soll, wird also der Barcode detektiert anstelle eines separaten Pfand-Merkmals oder zusammen mit dem Pfandmerkmal, und die Lesbarkeit, insbesondere vollständige Lesbarkeit des Barcodes, als Vorbedingung für die Berechtigung des Kunden für den Erhalt des Pfand-Entgelts gewertet. Die eigentliche Berechtigung erfolgt erst mit der Deaktivierung, insbesondere Zerstörung, des Pfandmerkmals und der Überprüfung dieser Deaktivierung. Um einen zweiten Bezug des Pfandentgelts zu verhindern, wird nach dem Detektieren der Barcode unleserlich gemacht, was auf unterschiedliche Arten von Zerstörung bis zusätzlicher Einfärbung erfolgen kann.

Bevorzugt wird jedoch der Barcode dadurch unleserlich gemacht, daß mittels Energieeinbringung, beispielsweise Bestrahlen durch einen Laserstrahl, eine zusätzliche Schwärzung, seien es zusätzlich Querstriche oder schwarze Flächen in Längsrichtung des Barcodes, erzeugt werden.

Bevorzugt wird die zusätzliche Eintragung dabei nicht auf dem Barcode selbst erzeugt, sondern auf einer ursprünglich transparenten Folie, mit der im Bereich des Barcodes ganz oder wenigstens teilweise vorher abgedeckt, insbesondere mittels Überkleben abgedeckt, ist. Die Einschwärzung z. B. mittels Laserbestrahlung auf der Folie und damit Verhindern der Lesbarkeit des darunter liegenden Barcodes ist deshalb sinnvoll, weil der Barcode selbst auf unterschiedlichen Objekten angebracht sein kann, beispielsweise in Form eines Papieretiketts oder auch in Form direkter Farb-Bedruckung auf der Oberfläche des Objekts. Da jedoch sichergestellt werden muß, daß mit ein und demselben Verfahren/ Vorrichtung zur Deaktivierung des Pfandmerkmals, insbesondere des Barcodes selbst, alle Objekte und deren Pfandmerkmale deaktiviert werden, wird diese Deaktivierung durch Schwärzung einer Folie über dem Barcode erzielt.

Dadurch ist es auch möglich, das Material und die spezifischen Eigenschaften, unter denen die Folie ihren Farbumschlag, z. B. von durchsichtig auf nicht durchsichtig, insbesondere ihre Einfärbung, erfährt, spezifisch festgelegt werden kann und insbesondere festgelegt werden kann, daß sie nur durch solche Einflußparameter vollzogen wird, die in der normalen Umgebung, welcher das Objekt in seinem normalen Turnus ausgesetzt wird, nicht vorkommen kann.

Theoretisch könnte die Farbwirkung - sei es auf der Folie oder dem Barcode selbst - durch simples Aufbringen von Farbe erfolgen.

Dies bewirkt jedoch in der Aufbringeinheit, also in dem Annahme-Automaten, eine hohe Verschmutzung, damit regelmäßigen Reinigungsbedarf bzw. Störanfälligkeit, sowie die Notwendigkeit einer Trocknungszeit für die Farbe. Gerade letzteres ist nachteilig aufgrund des Wunsches nach sofortiger Kontrolle des Erfolges der Deaktivierung.

Eine weitere Möglichkeit besteht darin, anstelle einer Verwendung des Barcodes als Pfandmerkmal ein separates Pfandmerkmal, und zwar insbesondere in Form eines Transponders und/oder Chips auf dem Objekt oder in dem Objekt vorzusehen. Dies im Bereich des Barcodes unterzubringen ist bei Etiketten, die den Barcode tragen, relativ gut möglich, da dann der flächige, dünne Transponder oder Chip unter dem Etikett angeordnet werden kann. Zum Zwecke der Deaktivierung des Transponders bzw. Chips wird dieser am einfachsten irreversibel zerstört, insbesondere durch Einbringen eines zu hohen elektromagnetischen Impulses und einer daraus im Transponder bzw. Chip entstehenden zu hohen Spannung, die diesen zerstört. Eine Anordnung bei aufgedrückten Aufmachungen bzw. Barcodes wirft dagegen Probleme auf.

Ferner muß darauf geachtet werden, daß das das Pfandmerkmal tragende Objekt selbst zuverlässig nicht durch die Deaktivierung des Pfandmerkmals beschädigt wird, da gerade bei Getränkeverpackungen diese durchaus mehrfach verwendet werden können, obgleich das auf dem Objekt aufgebrachte Etikett nur einmal verwendet, also vor der Wiederbefüllung der Pfandflasche abgelöst und ein neues Etikett aufgebracht, wird.

Auch aus diesem Grund ist die Verwendung einer Folie auf dem Barcode von Vorteil, da dann die Deaktivierungs-Parameter zuverlässig so auf die bekannten und immer gleich bleibenden Eigenschaften dieser Folie so eingestellt werden können, daß zuverlässig nur die Folie verändert wird, jedoch nicht das darunter liegende Etikett oder die Bedruckung und erst recht nicht das darunter liegende Objekt selbst.

Insbesondere ist vorgesehen, einen Annahmeautomaten mit einem Lesekopf auszustatten, welcher in der Lage ist, den Barcode zu lesen. Dadurch wird das Vorhandensein eines unbeschädigten Barcodes nicht nur detektiert, sondern es besteht ferner die Möglichkeit, die im Barcode enthaltenen Informationen, die sowohl Produktionsdaten als auch Verkaufsdaten enthalten, auf eine Speichereinheit - sei es im Annahmeautomaten oder in einer Wertkarte des das Objekt in den Automaten gebenden Kunden - weiterzugeben und dadurch statistische Auswertungen über den Warenfluß zu ermöglichen, die von großer Bedeutung, insbesondere für die Reduzierung des Transportvolumens dieser Produkte - sein können.

Der Annahmeautomat enthält ferner eine Deaktivierungsvorrichtung für das Pfandmerkmal, insbesondere eine Laserlicht-Quelle, so daß durch diese beiden Vorrichtungen, einerseits den Lesekopf und andererseits die Deaktivierungs-Einrichtung, bereits der Ablauf einer
- Detektierung des Pfandmerkmals,
- Deaktivierung des Pfandmerkmals,
- Überprüfung des Erfolgs der Deaktivierung
möglich ist.

### c) Ausführungsbeispiele

Ausführungsformen gemäß der Erfindung sind im folgenden anhand der Figuren beispielhaft näher beschrieben. Es zeigen:
- Fig. 1:: eine erfindungsgemäße Pfand-Flasche,
- Fig. 1a:: eine vergrößerte Darstellung des Barcode-Bereiches von dieser Flasche der Fig. 1,
- Fig. 1b:: den Barcodebereich gemäß Fig. 1a nach einer ersten EntwertungsVariante,
- Fig. 1c:: den Barcodebereich gemäß Fig. 1a nach einer anderen Entwertungs-Variante,
- Fig. 1d:: eine Schnittdarstellung durch Etikett und Folie,
- Fig. 2:: eine Aufsicht auf einen Annahmeautomaten, und
- Fig. 3:: ein Ablaufdiagramm der Pfandgut-Rücknahme.

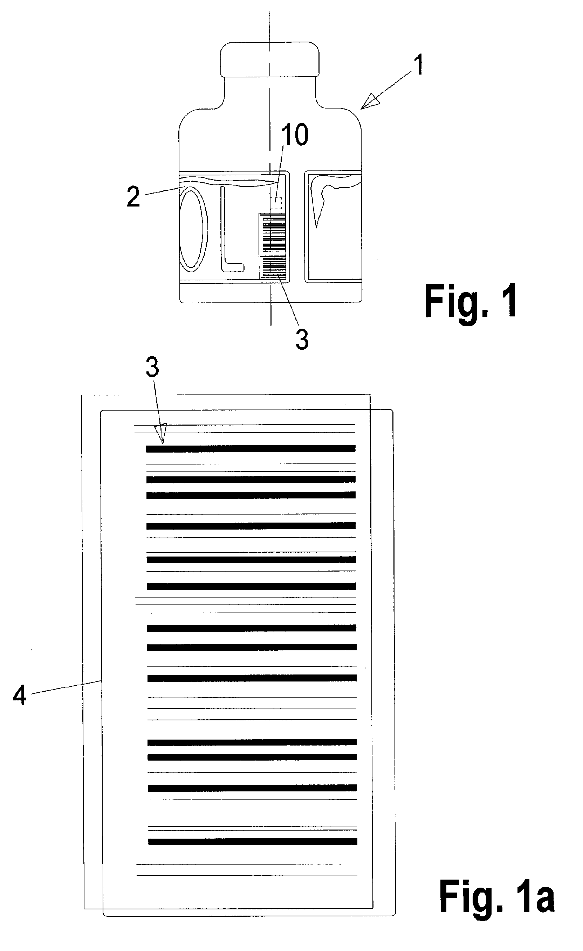

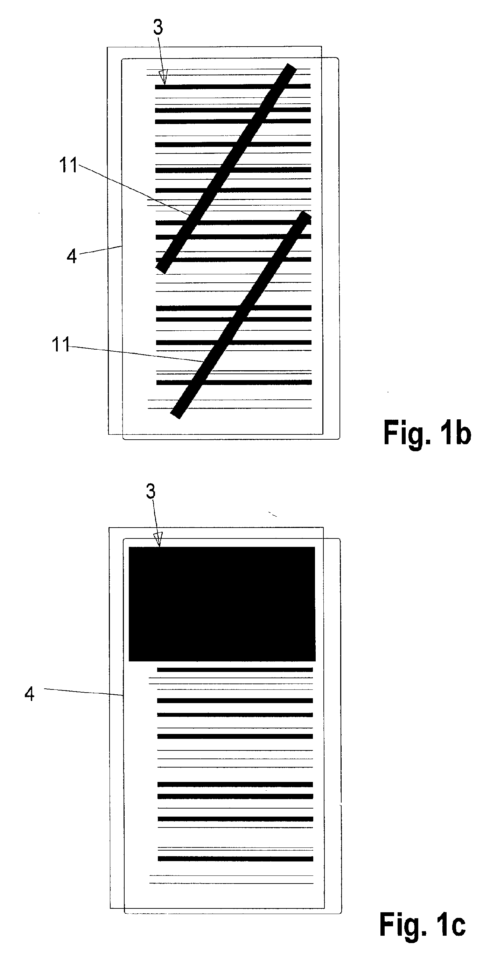

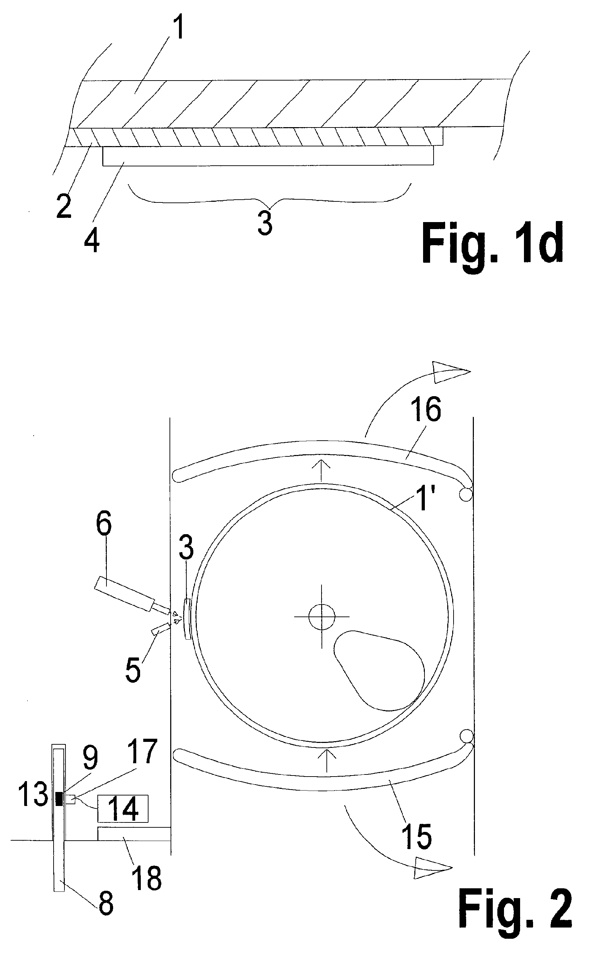

In Fig. 1 ist als typisches Pfandobjekt eine Flasche 1 dargestellt, die mit einem Einweg-Etikett 2 beklebt ist, welches einen Barcode 3 trägt.

Bei der Flasche 1 kann es sich um eine Einwegflasche oder um eine Mehrwegflasche handeln, jedoch wird auch bei mehrfacher Verwendung der Flasche vor den einzelnen Befüllungen immer das Etikett 2 entfernt und ein neues Einwegetikett 2 aufgebracht.

In der vergrößerten Darstellung dieses Barcodebereiches gemäß Fig. 1a und der Schnittdarstellung durch Fig. 1a der Fig. 1d ist eine Folie 4, deren Funktion im folgenden näher beschrieben wird, über einen Teil oder wie dargestellt den gesamten Bereich des Barcodes 3 geklebt.

Dabei wird der Barcode 3 als Pfandmerkmal verwendet.

Alternativ kann jedoch auch - wie ebenfalls in Fig. 1 dargestellt - statt der durch die Folie 4 erreichten Zusatzfunktion des Barcodes ein Transponder 10 oder gar ein vollständig funktionsfähiger Chip an der Flasche 1, vorzugsweise verklebt zwischen Etikett 2 und Flasche 1 oder eingearbeitet in das Etikett 2, verwendet werden.

Vorzugsweise befindet sich der Transponder 10 dabei in definierter Position bezüglich des Barcodes 3, beispielsweise also in Längsrichtung unmittelbar daneben oder sogar unter dem Barcode 3. In einem solchen Transponder 10 kann die Information abrufbar abgespeichert werden, ob für diese Flasche 1 ein Pfand vom Kunden entrichtet wurde und noch nicht zurückerhalten wurde, oder ob die Pfandrückzahlung bereits erfolgt ist.

Der Unterschied zwischen einem Transponder und einem Chip liegt darin, daß der Transponder im einfachsten Fall aus einem Empfänger besteht, der elektromagnetische Strahlung empfängt, und daraufhin mittels eines Senders ein Signal abgibt, wobei die empfangenen elektromagnetischen Strahlen gleichzeitig zur Energieversorgung dienen können. Ein Transponder kann darüber hinaus auch eine Speichereinheit und einen integrierten Schaltkreis, insbesondere in Form eines Mikroprozessors (im weiteren Chip genannt) umfassen.

Im folgenden wird die Variante gemäß der Figuren 1a ff. beschrieben, bei der der Barcode 3, insbesondere die darin enthaltene Pfand-Information, als Pfand-Merkmal verwendet wird, und zwar nicht durch die im Barcode enthaltene Information, sondern die prinzipielle, vollständige oder in definierten Teilbereichen gegebene oder nicht vorhandene Lesbarkeit des Barcodes wird als Pfandmerkmal benutzt.

Die über dem Barcode 3 geklebte Folie 4 ist zu diesem Zweck im Ausgangszustand durchsichtig, so daß mittels eines üblichen Barcode-Lesekopfes 5, wie in Fig. 2 im Rahmen des Annahmeautomaten 13 dargestellt, der Barcode 3 durch die Folie 4 hindurch detektiert und vollständig gelesen werden kann.

Die Folie 4 kann jedoch mittels Beeinflussung durch gezielte physikalische und/oder chemische Einflußparameter, die so gewählt werden, daß sie in der natürlichen Umgebung der Flasche 1 nie vorkommen, beispielsweise die Bestrahlung durch Laser-Licht mittels eines Lasers 6, eingefärbt, vorzugsweise geschwärzt werden kann.

Dabei kann gemäß Fig. 1b die Folie 4 Schwärzungen in Form von Zusatz-Strichen 13 erhalten, die vorzugsweise parallel zu den Strichen des Barcodes 3, sondern quer, also entweder senkrecht oder schräg hierzu, verlaufen und hinsichtlich ihrer Farbintensität und Dimension so geschaffen sein müssen, daß dann ein Barcode-Lesekopf 5 den Barcode 3 durch diese Folie 4 hindurch nicht mehr vollständig lesen kann.

Gemäß Fig. 1c kann zu diesem Zweck auch der Bereich der Folie 4 ganz oder teilweise flächig geschwärzt werden in Form von Zusatz-Schwärzungen 12, die beispielsweise mehrere Striche des Strichcodes 3 komplett überdeckt.

Auch hierdurch soll erreicht werden, daß der Barcode 3 danach wenigstens in Teilbereichen, vorzugsweise ganz, nicht mehr lesbar ist.

In Fig. 1d ist im Querschnitt dargestellt, daß auf der Wandung der Flasche 1 außen das Etikett 2, welches in der Regel aus Papier oder Kunststoffolie besteht, aufgeklebt ist, welches in einem bestimmten Bereich seiner Außenseite den Barcode 3 trägt. Dieser Barcode-Bereich ist mittels der vorbeschriebenen Folie 4 wenigstens teilweise, vorzugsweise im ganzen Bereich, überklebt.

Bei den zusätzlichen Schwärzungen der Folie 4 müssen eine Reihe von Randbedingungen eingehalten werden:

Zum einen darf die Beeinflussung, also Schwärzung, die beispielsweise auch durch Verbrennen oder Verschmoren der Folie erzielt werden kann, vorzugsweise nur die Folie 4 betreffen, höchstens noch den darunter liegenden Bereich des Etiketts 2. Eine Beschädigung der darunter liegenden Wandungsbereiche der Flasche 1 muß mit Sicherheit ausgeschlossen sein, vor allem dann, wenn es sich bei der Flasche 1 um eine Mehrweg-Flasche handelt.

Die Zusatzschwärzung 12, insbesondere in Form von Zusatz-Strichen 11 muß zuverlässig die Lesbarkeit des Barcodes im Ganzen oder wenigstens in Teilbereichen verhindern, und dürfen auch von der Folie 4 nicht wieder entfernbar sein.

Ebenso darf die Folie 4 nicht vom Etikett 2 entfernbar sein, jedenfalls nicht ohne dabei gleichzeitig den Barcode 3 soweit zu beeinträchtigen oder zu zerstören, daß er danach ebenfalls nicht mehr mittels eines Barcode-Lesekopfes 5 lesbar ist.

Fig. 2 zeigt die wesentlichen Funktionselemente eines Pfandgut-Annahmeautomaten 13 in dessen Aufsicht:

In eine Schleuse, die in Eingaberichtung von einer Eingangsklappe 15 und in Ausgangsrichtung von einer Ausgangsklappe 16, die jeweils öffenbar sind, verschlossen werden kann, wird das Pfandgut, in diesem Fall dargestellt in Form einer Dose 1', vom Kunden eingestellt, woraufhin sich die Eingangsklappe 15 schließt.

Vorzugsweise in einer Seitenwand dieser Schleuse ist einerseits ein Barcode-Lesekopf 5 eingebaut, und andererseits ein Laser 6 (oder eine andere physikalische oder chemische Einwirkung, insbesondere in Form elektromagnetischer oder magnetischer Strahlung, beispielsweise ein Blitz aus sichtbarem Licht, Bestrahlung mit Mikrowellen etc.), die beide in Richtung des Inneren der Schleuse und insbesondere auf den gleichen Bereich zielen, nämlich den auf der Außenseite der Dose 1' vorhandenen Barcode 3. Vorzugsweise wird die Dose 1' dabei so in der Schleuse positioniert, daß sich der Barcode 3 gegenüber des Lesekopfes 5 und des Lasers 6 befindet, ansonsten kann eine Relativbewegung zwischen dem Objekt, also der Dose 1', einerseits und Lesekopf 5 sowie Laser 6 andererseits vorgesehen werden, vorzugsweise in Form eines Drehtellers, auf dem die Dose 1' steht und der so lange gedreht wird, bis der Lesekopf 6 den vorbeilaufenden Barcode 3 detektiert hat.

Der Lesekopf 5 liest den Barcode 3, und gibt zumindest die Information, daß der Barcode 3 vollständig oder in einem vorgegebenen Teilbereich lesbar ist, an einen Informations-Speicher 14 weiter. Ferner kann der Kunde eine Wertkarte 8 in einen entsprechenden Schlitz des Annahmeautomaten 13 einführen, um die Pfand-Summe des zurückgegebenen Objekts auf dem Wert-Chip 9, der vorzugsweise ohne Kontakt zur Umgebung vollständig umschlossen in der Wertkarte 8 untergebracht ist, mittels eines Schreibkopfes 17 zusätzlich abgespeichert wird, was der Kunde vorzugsweise auch an einem im Automaten angeordneten Display 18 ablesen kann.

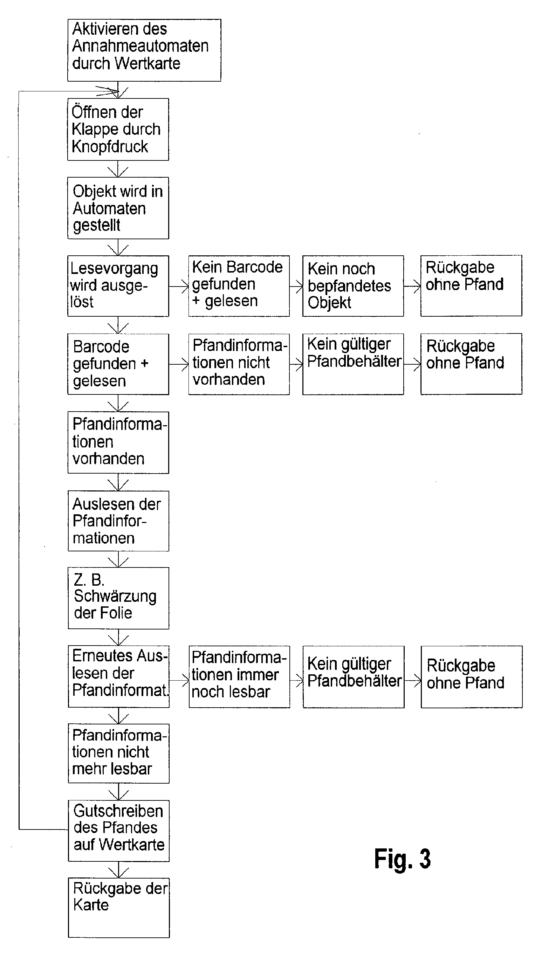

Fig. 3 zeigt das Ablaufdiagramm bei Rückgabe des Pfandgutes im Automaten:

Zum Öffnen der Eingangsklappe des Annahme-Automaten 14 genügt vorzugsweise nicht ein einfacher Knopfdruck, sondern es muß zuvor ein Aktivieren des Automaten durch Einstecken der Wertkarte 8 des Kunden erfolgen.

Durch diese zuvor nötige Legitimierung soll spontaner Vandalismus im Inneren der Schleuse des Automaten reduziert werden.

Durch das Aktivieren kann auch unmittelbar, ohne zusätzlich benötigten Knopfdruck, die Eingangsklappe 15 geöffnet und das Objekt, also die Flasche 1 oder Dose 1' in die Schleuse des Automaten gestellt werden.

Nach dem Schließen der Eingangsklappe 15 wird im Inneren der Schleuse der Lesevorgang ausgelöst, bei dem der Lesekopf 5 versucht, den Barcode zu lokalisieren und zu lesen. Konnte kein Barcode gefunden und gelesen werden, handelt es sich um kein noch bepfandetes Objekt, und das Objekt wird ohne Pfandgutschrift zurückgegeben.

Wurde der Barcode gefunden und gelesen, wird vom Lesekopf als nächstes nach der Pfandinformation gesucht. Falls die Pfandinformation die Lesbarkeit des Barcodes ist, ist dieser Schritt im Finden und Lesen des Barcodes bereits enthalten.

Ist eine Pfandinformation nicht vorhanden, erfolgt wie bei fehlendem oder nicht lesbaren Barcode die Rückgabe des Objekts ohne Pfand an den Kunden.

Ist die Pfandinformation vorhanden, also vor allem die Information über die Höhe des Pfandes, die beispielsweise im Barcode durch die Klassifizierung der Behälter im Barcode enthalten sein kann, so wird diese Pfandinformation ausgelesen und im Speicher 14 des Automaten 13 zunächst gespeichert.

Anschließend wird die Pfandinformation deaktiviert, beispielsweise durch Schwärzung der Folie mittels Bestrahlung durch den Laser 6.

Anschließend wird erneut versucht, mittels des Lesekopfes 5 die Pfandinformation auf dem Objekt zu lesen. War die Schwärzung der Folie erfolgreich, darf dieses erneute Lesen der Pfandinformation nicht erfolgreich sein.

Sofern dies der Fall ist, wird die im Speicher abgelegte Pfandinformation auf der Wertkarte des Kunden gutgeschrieben und entweder die Karte zurückgegeben oder - nach automatischer Entfernung des Objekts durch die Ausgabeklappe 16 aus der Schleuse - die nächste Rücknahme eines Objektes begonnen.

War nach dem Schwärzen der Folie das Lesen der Pfandinformation nach wie vor möglich, handelt es sich ebenfalls nicht um ein noch bepfandetes Objekt, und das Objekt wird ohne Gutschrift vom Pfand auf der Wertkarte dem Kunden zurückgegeben. Diese Feststellung ist zwingend, da die Zusatz-Einfärbung, die auf der Folie geschieht, durch solche physikalischen und/oder chemischen Einflußfaktoren erfolgt, daß sie nur auf der Folie, nicht aber auf dem Einwegetikett direkt, die gewünschte Zusatzeinfärbung bewirkt.

Hat also jemand die Folie vom Barcode abgezogen, und dies zu Wege gebracht, ohne dabei den Barcode zu beschädigen, so bestrahlt der Laser nunmehr direkt das Etikett, bewirkt dabei aber keine zusätzliche Einfärbung oder gar Schwärzung, da die Parameter des Lasers, insbesondere Wellenlänge, Leistung und Bestrahlungsdauer, so gewählt sind, daß sie eine Schwärzung nur der Folie bewirken können, und weder auf einem darunter liegenden Etikett, noch auf einer darunter liegenden, auf dem Objekt nur aufgedruckten Barcode, falls die Folie nicht vorhanden ist.

Aus vorstehenden Ausführungen wird klar, daß die beschriebene Verfahrensweise nicht nur für das Handling der Pfandrückzahlung bei Getränkeverpackungen, sondern auch bei anderen Objekten, sei es anderen Verpackungen, sei es Paletten oder industriellen Hilfsvorrichtungen, geeignet ist, und darüber hinaus auch nicht nur für typische Pfandsysteme, z. B. auch für die Abgeltung von auf Zeit gemieteten Objekten geeignet ist.

Die Gutschrift des Pfandbetrages auf einer Wertkarte wird gegenüber der Ausgabe in Bargeld oder der Ausgabe eines Papierbons, welcher an einer Kasse eingelöst werden kann, bevorzugt, damit wegen fehlendem Bargeld im Automaten ein Aufbrechen nicht provoziert wird und auf der anderen Seite eine Aufstellung der Rücknahmeautomaten an Orten möglich ist, wo keine Kasse und damit Auszahlungsmöglichkeit des Papierbons vorhanden ist, beispielsweise außerhalb von Supermärkten und Getränkemärkten, etwa auf öffentlichen Grund wie die bekannten Recyclingbehälter für Glas, Papier und Ähnliches, oder mitten in einer Wohnanlage.

### BEZUGSZEICHENLISTE

- 1: Flasche
- 1': Dose
- 2: Einweg-Etikett
- 3: Barcode
- 4: Folie
- 5: Lesekopf
- 6: Laser
- 7: Spiegel
- 8: Wertkarte
- 9: Wertkartenchip
- 10: Transponder
- 11: Zusatz-Striche
- 12: Zusatz-Schwärzung
- 13: Annahme-Automat
- 14: Informations-Speicher
- 15: Eingangsklappe
- 16: Ausgangsklappe
- 17: Schreibkopf
- 18: Display

## Patentansprüche

1. Verfahren der Rückgabe von mit einem entwertbaren Pfand-Merkmal ausgestatteten Objekten,
**dadurch gekennzeichnet, daß**
- das Pfand-Merkmal auf dem Objekt detektiert und anschließend
- irreversibel deaktiviert sowie
- die Gegenleistung für das Pfandmerkmal erbracht wird.

2. Verfahren nach Anspruch 1,
**dadurch gekennzeichnet, daß**
- die Gegenleistung gegenüber dem Kunden erbracht wird und insbesondere in einem Pfandwert besteht, und insbesondere
- die Deaktivierung des Pfandmerkmales anschließend auf ihren Erfolg überprüft wird, insbesondere durch den Versuch des erneuten Detektierens des Pfandmerkmales.

3. Verfahren nach einem der vorhergehenden Ansprüche,
**dadurch gekennzeichnet, daß**
- das Pfandmerkmal auf einem Einweg-Untergrund, insbesondere Einweg-Etikett (2) oder einer Einweg-Bedruckung, des Objekts angeordnet, insbesondere aufgebracht, ist, und insbesondere
- das Pfandmerkmal im Flächenbereich des Barcodes (3) aufgebracht ist.

4. Verfahren nach einem der vorhergehenden Ansprüche,
**dadurch gekennzeichnet, daß**
- als Pfandmerkmal der Barcode (3) verwendet wird, insbesondere die Lesbarkeit, insbesondere vollständige Lesbarkeit, des Barcodes als aktiviertes Pfand-Merkmal gewertet wird und die demgegenüber verringerte, insbesondere vollständig fehlende, Lesbarkeit des Barcodes als deaktiviertes Pfandmerkmal gewertet wird, und insbesondere
- die Verringerung der Lesbarkeit des Barcodes (3) durch Bewirken eines zusätzlichen Einfärbung direkt oder indirekt auf dem Barcode erfolgt, und insbesondere
- das Erzielen der zusätzlichen Einfärbung durch Aufbringen von Farbe erfolgt.

5. Verfahren nach Anspruch 4,
**dadurch gekennzeichnet, daß**
- das Erzielen der zusätzlichen Einfärbung durch Bestrahlen mittels elektromagnetischer Strahlung, insbesondere einer bestimmten Wellenlänge, insbesondere mittels Laserlicht, erfolgt, und insbesondere
- das Erzielen einer zusätzlichen Einfärbung durch Überkleben des Barcodes mit einer nicht ohne Zerstörung des Barcodes abziehbaren Schicht erfolgt, und insbesondere
- das Erzielen der zusätzlichen Einfärbung durch Zerstören, insbesondere Zerkratzen, Abreiben oder Abschleifen, des Barcodes erfolgt, und insbesondere
- die Einfärbung, insbesondere mittels Bestrahlung durch elektromagnetische Strahlung, nur eine zusätzliche Einfärbung einer zuvor transparenten Folie (4) bewirkt, die vorher auf den Barcode (3) aufgebracht wurde und diesen wenigstens teilweise bedeckt und nicht ohne Zerstörung des Barcodes (3) von diesem entfernbar ist.

6. Verfahren nach einem der Ansprüche 4 bis 5,
**dadurch gekennzeichnet, daß**
das Erzielen einer zusätzlichen Einfärbung im Aufbringen von Zusatzstrichen (11) im Bereich des Barcodes, insbesondere parallel, insbesondere mehrere Striche (3a,b) des Barcodes überdeckend, zu den Strichen (3a,b,...) des Barcodes besteht oder dem Aufbringen einer Zusatz-Schwärzung (12) über wenigstens einen Teilbereich der Anzahl von Strichen (3a,b,...) des Barcodes (3).

7. Verfahren nach einem der vorhergehenden Ansprüche,
**dadurch gekennzeichnet, daß**
als Pfandmerkmal ein Transponder (10) bzw. Chip, der insbesondere im Flächenbereich des Barcodes (3) auf dem Objekt angebracht ist, verwendet wird.

8. Verfahren nach einem der vorhergehenden Ansprüche,
**dadurch gekennzeichnet, daß**
- das Entgelt des Pfandes an den Kunden durch zusätzliches Abspeichern des Pfandwertes auf einer Wertkarte (8) erfolgt, und insbesondere
- die Wertkarte (8) mit einem Wertkarten-Chip (9), insbesondere kontaktlos unter der Oberfläche der Wertkarte (8) eingebettet, ausgestattet ist.

9. Verfahren nach einem der vorhergehenden Ansprüche,
**dadurch gekennzeichnet, daß**
beim Lesen des Barcodes in einem Pfandgut-Annahmeautomaten (13) Produktionsdaten, insbesondere Erstellung des Barcodes und/oder Abfülldatum und/oder Kaufdaten, insbesondere Kaufort und/oder Kaufdatum, sowie Rückgabedaten, insbesondere Rückgabezeit und Rückgabeort, gespeichert, insbesondere in einer Speichereinheit des Annahmeautomaten (13) und/oder der Wertkarte (8), gespeichert wird.

10. Gekennzeichnetes, insbesondere bepfandetes Objekt (1) mit einem Barcode (3) und einem Pfand-Merkmal,
**dadurch gekennzeichnet, daß**
- das Pfandmerkmal deaktivierbar ist, und insbesondere
- das aktivierte Pfandmerkmal ein lesbarer, insbesondere vollständig lesbarer, Barcode (3) ist.

11. Objekt nach einem der vorhergehenden Vorrichtungsansprüche,
**dadurch gekennzeichnet, daß**
- der auf dem Einwegetikett (2) oder dem Objekt aufgebrachte Barcode (3) mit einer im Ausgangszustand transparenten Folie (4) wenigstens teilweise, insbesondere vollständig, abgedeckt ist und die Folie (4) ohne Beschädigung des Barcodes (3) nicht entfernbar ist, und insbesondere
- die Folie (4) mittels eines physikalischen und/oder chemischen Verfahrens/einer Vorrichtung wenigstens teilweise einfärbbar ist, ohne daß das darunter liegende Objekt, insbesondere die Flasche (1), zu beschädigen, unabhängig von deren Material und Gestalt.

12. Objekt nach einem der vorhergehenden Vorrichtungsansprüche,
**dadurch gekennzeichnet, daß**
die Folie (4) durch natürlich vorkommende Umwelteinflüsse, insbesondere gegenüber dem Objekt natürlich auftretende Druck-, Temperatur-, Strahlungs- und Zeit-Faktoren nicht undurchsichtig wird.

13. Objekt nach einem der vorhergehenden Vorrichtungsansprüche,
**dadurch gekennzeichnet, daß**
die Folie (4) mittels elektromagnetischer Strahlung einer definierten Wellenlänge, insbesondere Laserlicht, undurchsichtig gemacht, insbesondere geschwärzt, werden kann.

14. Objekt (1) mit einem Barcode (3) und einem Pfand-Merkmal,
**dadurch gekennzeichnet, daß**
das Pfand-Merkmal ein Chip und/oder Transponder (10) ist.
